# EUROPEAN PATENT APPLICATION

(11) **EP 4 484 508 A1**
(43) Date of publication of application: **01.01.2025**
(21) Application number: 23756080.0
(22) Date of filing: 19.01.2023
(51) Int. Cl.: C09D 11/101

(54) **ACTIVE ENERGY RAY-CURABLE INK COMPOSITION**

(30) Priority: 21.02.2022 JP 2022024590
(71) Applicant: Sakata INX Corporation, Osaka-shi, Osaka 550-0002 (JP)
(72) Inventor: ITO Aoi, Osaka-shi, Osaka 550-0002 (JP); HISHINUMA Keishiro, Osaka-shi, Osaka 550-0002 (JP); OMI Naoki, Osaka-shi, Osaka 550-0002 (JP); SUZUKI Takafumi, Osaka-shi, Osaka 550-0002 (JP)
(74) Representative: V.O.
(86) International application number: PCT/JP2023/001498
(87) International publication number: WO 2023/157552

(57) **Abstract**

An active energy ray curable ink composition is provided that exhibits both satisfactory adhesiveness and fluidity despite use a polymer of allyl monomer as a binder resin instead of conventional diallyl phthalate resin. The active energy ray curable ink composition comprises a compound having an ethylenically unsaturated bond, an (A) component being a polymer of an allyl monomer represented by Formula (1), and a (B) component being a resin of modified rosin and/or a resin containing a terpene monomer backbone: 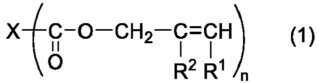 where R¹ and R² are each independently a hydrogen atom or an alkyl group of 1 to 5 carbon atoms, X is an n-valent group comprising a 4 to 8 membered fatty ring skeleton, and n is 2 or 3.

## Description

### Technical Field

The present invention relates to an active energy ray curable ink composition.

### Background Art

In printing with ink compositions, various printing processes are appropriately selected according to the materials and shapes of objects for printing, and ink compositions with appropriate properties are also selected according to the printing processes. For example, for flat printing paper, offset printing using a planographic plate is selected that uses ink compositions for offset printing containing vegetable oil or mineral oil with high viscosity; or for printing on corrugated board, flexographic printing using a rubber letterpress is selected that uses water-based flexographic ink compositions with significantly high fluidity. As is well known, various other printing methods, such as gravure printing, screen printing, letterpress printing and inkjet printing are also used for printing.

Meanwhile, one of the most important factors in printing is the drying of the ink composition after printing, along with the adhesion of the ink composition onto the printed object to form an image. The ink composition immediately after printing is not sufficiently fixed on the surface of the printed object and causes some problems, such as adhesion of the ink composition to fingers when a user touches the object, or staining of the image due to disorder of inks when the printed area is rubbed. Before the printed substrate is transferred for post-processing after printing, the ink composition must be sufficiently fixed (i.e., dried) on the surface of the object. The process of fixing (i.e., drying) of the ink composition after printing varies depending on the type of ink composition used. For example, ink is fixed by penetration of solvent into the printed object, evaporation of solvent from the printed object, and oxidation of components in the ink composition into a high molecular weight. In any case, the drying process takes a considerable amount of time, and the time required for the drying process is not negligible in these days when printing speed has been improved by technological advances.

Under these circumstances, printing using active energy ray curable ink compositions has been used in recent years. In active energy ray curable ink compositions, irradiation with ultraviolet rays or electron beams causes the components in the ink composition to increase in molecular weight to achieve drying. The time required for drying is significantly short, and printing with this ink composition meets the demand for printed materials to be transferred for post-processing as quickly as possible. An example of the ink compositions compatible with such a drying process is proposed in PTL 1.

In active energy ray curable ink compositions, diallyl phthalate binder resins have long been used, as shown in paragraph 0037 of PTL 1 for the following reasons: The diallyl phthalate resin has excellent compatibility with acrylate monomers and oligomers having acryloyl groups, which are frequently used in active energy ray curable ink compositions. However, diallyl phthalate, the raw material used to produce diallyl phthalate resin, is a phthalate ester and is one of the chemicals of concern for its effects on the human body and the environment. Although the diallyl phthalate resin produced by polymerization of the ester is harmless, it is desirable to reduce its use as long as there are concerns about its raw materials.

Under these circumstances, in a photocurable resin composition that can also be used as an ink composition, a polymer (hereinafter also referred to as allyl polymer) produced by polymerization of an ester of cycloalkane carboxylic acid or cycloalkene carboxylic acid with allyl alcohol is proposed as one of the components (see, for example, PTL 2). The allyl polymer produced from the allyl alcohol ester of cyclohexane dicarboxylic acid, which is one of the preferred examples in this patent, corresponds to the one in which the benzene ring in the diallyl phthalate resin is replaced with cyclohexane, and is expected to be used as a binder resin in active energy ray curable ink compositions, like the diallyl phthalate resin. Since the raw material is a mono- or poly-carboxylic acid ester of cycloalkane or cycloalkene, not phthalate ester, which is a concern for human health and the environment, such concerns can be expected to be further reduced.

### Citation List

### Patent Literature

PTL 1: Japanese Patent Unexamined Publication No. 2015-193677
PTL 2: Japanese Patent Unexamined Publication No. 2019-026675

### Summary of Invention

### Technical Problem

However, studies by the present inventors have find through follow-up studies that an active energy ray curable ink composition prepared with the binder resin of the allyl polymer described in PTL 2 exhibits several handling problems, such as insufficient adhesiveness of the cured film of the ink composition to various base material, poor fluidity of the ink composition, and the occurrence of backing away during printing.

It is an object of the present invention, which has been completed in view of the above circumstances, to provide an active energy ray curable ink composition that can exhibit both satisfactory adhesiveness and fluidity of ink compositions despite the use of a polymer binder resin of allyl monomer instead of conventional diallyl phthalate resin.

### Solution to problem

As a result of diligent study to solve the above problems, the inventors have found that use of the allyl polymer in any combination with a resin of modified rosin and/or a resin containing terpene monomer backbone imparts not only satisfactory adhesiveness but also improved fluidity to the ink composition. The present invention has been accomplished based on such findings and provides the following aspects:
(1) The present invention relates to an active energy ray curable ink composition comprising a compound having an ethylenically unsaturated bond, an (A) component being a polymer of an allyl monomer represented by Formula (1), and a (B) component being a resin of modified rosin and/or a resin containing a terpene monomer backbone: 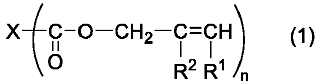 where R¹ and R² are each independently a hydrogen atom or an alkyl group of 1 to 5 carbon atoms, X is an n-valent group comprising a 4 to 8 membered fatty ring skeleton, and n is 2 or 3.
(2) The present invention also relates to an active energy beam curable ink composition according to Aspect (1), wherein X in Formula (1) is a divalent group represented by any one of the following formulae: 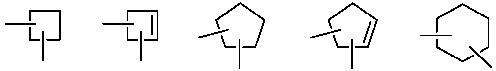 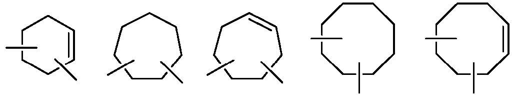
(3) The present invention also relates to an active energy ray curable ink composition according to Aspect (1) or (2), wherein the (B) component has a weight average molecular weight in the range of 1000 to 100,000.
(4) The present invention also relates to an active energy ray curable ink composition according to any one of Aspects (1) to (3), wherein the content of the (A) component in the entire composition is 1 to 30% by mass.
(5) The present invention also relates to an active energy ray curable ink composition according to any one of Aspects (1) to (4), wherein the content of the above (B) component in the entire composition is 1 to 30% by mass.
(6) The present invention also relates to an active energy ray curable ink composition according to any one of Aspects (1) to (5), wherein the total content of the (A) component and the (B) component in the entire composition is 5 to 40 % by mass.
(7) The present invention also relates to an active energy ray curable ink composition according to any one of Aspects (1) to (6), wherein the mass ratio of the component (A) to the component (B) is 20:80 to 80:20.
(8) The present invention also relates to an active energy ray curable ink composition according to any one of Aspects (1) to (7), wherein the resin of modified rosin is an alkyd resin of modified rosin.
(9) The present invention also relates to an active energy ray curable ink composition according to any one of Aspects (1) to (8), wherein X in Formula (1) is a 1,2-cyclohexylene group.

### [Advantageous Effects of Invention]

The present invention provides an active energy ray curable ink composition that can exhibit both satisfactory adhesiveness and fluidity despite use a polymer of allyl monomer as a binder resin instead of conventional diallyl phthalate resin.

### [Description of Embodiments]

An embodiment of an active energy ray curable ink composition (hereinafter abbreviated as "ink composition") will now be described. The following embodiment should not be construed as limiting the present invention and may be implemented with appropriate modifications within the scope of the invention.

The active energy ray curable ink compositions of the present invention can be cured upon irradiation with active energy rays, such as ultraviolet rays and electron beams. As will be described below, the ink composition of the present invention contain a compound, for example, in the form of monomer or oligomer, having ethylenically unsaturated bonds. Radicals generated in the ink composition upon irradiation with active energy rays cure The compound having ethylenically unsaturated bonds generates radicals upon irradiation with active energy rays and the radicals makes the compound high molecular weight, in other words cure the ink composition. Irradiation of a sticky ink composition on the surface of a printed matter immediately after printing with an active energy ray causes the ink composition to hardens instantly into a dry or tack free film. In the case of using ultraviolet rays as the active energy rays, a photoinitiator described below is added to the ink composition, where this photoinitiator causes intramolecular cleavage by UV irradiation to generate radicals to cure the ink composition. In the case of using electron beams as the active energy ray, various components in the ink composition undergo intramolecular cleavage upon electron beam irradiation to generate radicals to cure the ink composition. Thus, when an electron beam is selected as the active energy beams, the photoinitiator is not an essential component in the ink composition.

Examples of active energy rays used to cure the ink composition of the present invention include ultraviolet rays and electron beams. Among these, ultraviolet rays are preferred as the active energy rays from the viewpoint of cost and ease of handling of equipment. In recent years, however, electron beam generators have been introduced into printing equipment, and electron beams are also equally preferred as the active energy rays from this viewpoint. The wavelength of the ultraviolet rays used as an active energy rays may be 400 nm or less, although it should be determined according to the absorption wavelength of the photoinitiator to be used. Examples of UV irradiation devices generating such UV light include metal halide lamps, high-pressure mercury lamps, excimer lamps filled with noble gases, and ultraviolet light-emitting diodes (LEDs). Any irradiation device capable of generating electron beams can be employed without limitation. Examples of such irradiation devices include Cockroft-Waldsin, Bandegraf, or resonant transformer accelerators. The energy of the electron beams should be preferably 50 to 1000 eV, more preferably 100 to 300 eV. In the case of use of any active energy beams, the irradiation dose is appropriately adjusted while the curing state of the ink composition is being observed.

The ink composition of the present invention can be applied to any plate format, with no restriction. Examples of such a plate type include offset printing, waterless offset printing, letterpress printing, rubber letterpress printing, flexographic printing, gravure printing, and inkjet printing. The properties, such as viscosity, of the ink composition should be adjusted appropriately according to the applicable plate format. Among these, offset printing and waterless offset printing are preferably selected as plate types to which the present invention is applied.

The ink composition of the present invention is characterized in that it contains a compound having an ethylenically unsaturated bond, an (A) component being a polymer of an allyl monomer represented by Formula (1) as above, and a (B) component being a resin of modified rosin and/or a resin containing terpene monomer backbone. In the case of use of ultraviolet light as the active energy rays, the ink composition of the present invention further contains a photoinitiator. The ink composition of the present invention may also contain a colorant (in the present invention, the colorant shall also include components that impart a white or metallic color to the ink composition). An ink composition of the present invention containing a colorant may be used, for example, for applications of printing of images and characters. An ink composition of the present invention not containing a colorant may be used, for example, for coating applications. Individual components will be described below.

### Compounds having ethylenically unsaturated bonds

The compound having ethylenically unsaturated bonds is a component that polymerize into high molecular weight by radicals generated in the ink. Examples of such a compound include monomer and oligomer. Various polymers having ethylenically unsaturated bonds, which polymers have higher molecular weight than oligomers, are also commercially available. Such a polymer can also be cross-linked by the monomer and oligomer molecules or between the polymer molecules themselves to increase their molecular weight. The resulting polymers may be used as compounds having unsaturated bonds together with the above monomers and oligomers. As already mentioned, such radicals are generated from photoinitiators that have undergone UV irradiation or from the constituents in the ink composition that have undergone electron beam irradiation.

The monomer is a component that has ethylenically unsaturated bonds and polymerize into a high molecular weight, as described above. Before polymerization, monomer is usually a liquid component with relatively low molecular weight, and is used as solvent for dissolving resin components to make varnishes, or for adjusting the viscosity of the ink composition. Examples of the monomer include monofunctional monomers each having one ethylenically unsaturated bond in the molecule and multifunctional monomers having two or more ethylenically unsaturated bonds in the molecule. Multifunctional monomers can cross-link between molecules on the curing of the ink composition and thus can speed up the curing rate and create a stronger film. Monofunctional monomers do not have such cross-linking ability, but they contribute to reducing the curing shrinkage associated with cross-linking. Various combinations of these monomers can be used as needed.

Examples of the monofunctional monomers include alkyl acrylates, such as methyl (meth)acrylate, ethyl (meth)acrylate, butyl (meth)acrylate, hexyl (meth)acrylate, octyl (meth)acrylate, and dodecyl (meth)acrylate; (meth)acrylic acid, (meth)acrylates of ethylene oxide adduct, (meth)acrylates of propylene oxide adduct, isobornyl (meth)acrylate, cyclohexyl (meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, glycerin mono(meth)acrylate, acryloxyethyl phthalate 2-(meth)acryloxyethyl-2-hydroxyethyl phthalate, 2-(meth)acryloyloxypropyl phthalate, β-carboxyethyl (meth)acrylate, (meth)acrylic acid dimer, ω-carboxypolycaprolactone mono(meth)acrylate, dimethylaminoethyl (meth)acrylate, diethylaminoethyl (meth)acrylate, N-vinylpyrrolidone, N-vinylformamide, and (meth)acryloyl morpholine. These monofunctional monomers can be used alone or in any combination. Throughout the specification, "(meth)acrylate" means "acrylate and/or methacrylate" and "(meth)acrylic acid" means "acrylic acid and/or methacrylic acid.

Examples of the multifunctional monomers includes difunctional monomers, e.g., ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-decanediol di(meth)acrylate (meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentandiol di(meth)acrylate, 2-methyl-2-propyl-1,3-propanediol di(meth)acrylate, 2,4-dimethyl-2,4 pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, tricyclodecane dimethylol dicaprolactonate di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, tetraethylene oxide adduct dicaprolactonate di(meth)acrylate, bisphenol A tetraethylene oxide adduct dicaprolactonate di(meth)acrylate, and bisphenol F tetraethylene oxide adduct dicaprolactonate di(meth)acrylate; trifunctional monomers, e.g., glycerol tri(meth)acrylate, trimethylolpropane tri(meth)acrylate, trimethylolpropane tricaprolactonate tri(meth)acrylate, trimethyloloctane tri(meth)acrylate, and pentaerythritol tri(meth)acrylate; and tetra- and higher functional monomers, e.g., trimethylolpropane tetra(meth)acrylate, pentaerythritol tetra(meth)acrylate, pentaerythritol tetracaprolactonate tetra(meth)acrylate, diglycerol tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate. Among these monomers preferred are trimethylolpropane triacrylate (TMPTA; trifunctional), ditrimethylolpropane tetraacrylate (Di-TMPTA; tetrafunctional), dipentaerythritol hexaacrylate (DPHA; hexafunctional), glycerol propoxytriacrylate (GPTA; trifunctional), and hexanediol diacrylate (HDDA; bifunctional). These multifunctional monomers can be used alone or in any combination.

Another type of monomer is epoxidized vegetable oil acrylate, which is produced by acrylic modification of epoxidized vegetable oil. This monomer is a compound produced by ring-opening addition of (meth)acrylic acid to the epoxy group of epoxidized vegetable oil, which is epoxidized by an oxidizing agent, such as peracetic acid or perbenzoic acid to the double bond of unsaturated vegetable oil. Unsaturated vegetable oils are triglycerides with at least one fatty acid having at least one carbon-carbon unsaturated bond. Examples include chives oil, linseed oil, eno oil, oitic oil, olive oil, cocoa oil, kapok oil, kaya oil, mustard oil, myonin oil, kiri oil, kukui oil walnut oil, poppy oil, sesame oil, safflower oil, dicotyledon seed oil, soybean oil, giant windmill oil, camellia oil, corn oil, rape seed oil, niger oil, nuka oil, palm oil, castor oil, sunflower oil, grape seed oil, henflower oil, pine seed oil, cotton seed oil, coconut oil, groundnut oil, and dehydrated castor oil. Since these monomers are derived from vegetable oils, they help to increase the biomass content in ink compositions. Various types of epoxidized vegetable oil acrylates, which are commercially available, may be used.

Oligomers are components that polymerize into a high molecular weight as described above. Since they are originally relatively high molecular weight components, they are also used to impart appropriate viscosity and elasticity to ink compositions. Examples of the oligomers include epoxy-modified (meth)acrylates exemplified by esters of (meth)acrylic acid and terminal hydroxyl groups generated after ring-opening of epoxy groups in epoxy compounds such as epoxy resins with acids or bases, rosin-modified epoxy acrylates, polyester-modified (meth)acrylate exemplified by esters of (meth)acrylic acid with terminal hydroxyl groups, polyether-modified (meth)acrylate exemplified by esters of (meth)acrylic acid with terminal hydroxyl groups of a polyether compound, and urethane-modified (meth)acrylate exemplified by esters of (meth)acrylic acid with terminal hydroxyl groups in condensation compounds of polyisocyanate compounds and polyol compounds. Such oligomers are commercially available, for example, the EBECRYL series manufactured by Daicel Cytec, the CN and SR series manufactured by Sertomer, the Aronix M-6000, 7000, and 8000 series, Aronix M-1100, Aronix M-1200, and Aronix M-1600, and NK Oligo manufactured by Shin Nakamura Chemical Co. These oligomers may be used alone or in any combination.

Polymers with ethylenically unsaturated bonds are components that can further polymerize into higher molecular weight, together with the monomers and oligomers described above, and are useful for an improvement in viscoelasticity of ink compositions because they have a large molecular weight even before the active energy beam is applied. Such polymers are used, for example, in the form of solution or dispersion in monomers, which are low-viscosity liquids. Examples of the polymers having ethylenically unsaturated bonds include acrylic resins with unreacted unsaturated groups and acrylic modified phenolic resins.

The content of the compound with ethylenically unsaturated bonds in the ink composition is preferably 30 to 70 % by mass, more preferably 40 to 60 % by mass. The content of the compound with ethylenically unsaturated bonds in the above range enables both high curability and satisfactory printability. The content of the polymer with ethylenically unsaturated bonds is preferably 0 to 50% by mass, more preferably 0 to 30% by mass, most preferably 0 to 20% by mass. The polymer content within the range advantageously provides an ink composition with appropriate viscoelasticity to suppress the occurrence of misting and also high curability.

### Polymer from allyl monomers

The ink composition of the present invention contains an (A) component, which is a polymer of allyl monomer represented by Formula (1) below. This polymer is prepared by polymerizing the allyl monomer represented by Formula (1) below by radical polymerization or other means. A completely polymerized component may also be used as inert resin functioning as a binder. Alternatively, the polymerization reaction may be stopped at about 50% to 80%, leaving unreacted unsaturated bonds as the curing component the polymerization reaction is stopped at 50 to 80% to leave unreacted unsaturated bonds as a curing component.

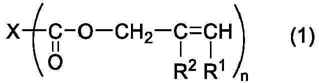

In Formula (1), R¹ and R² are each independently a hydrogen atom or an alkyl group of 1 to 5 carbon atoms. Throughout the specification, "each independently " means that each is independently determined without regard to each other, and may be identical or different from each other. Examples of such alkyl groups include methyl, ethyl, propyl, isopropyl, butyl, and pentyl. In a preferred embodiment, R¹ and R² are both hydrogen atoms, which is not restrictive.

In Formula (1), n is 2 or 3, and X is an n-valent group having a 4 to 8 membered cycloaliphatic skeleton. The term "n-valent group having a 4 to 8 membered cycloaliphatic skeleton" means an n-valent group in which a bonding hand to another group is generated from n carbon atoms among the carbon atoms constituting the aliphatic ring having 4 to 8 carbon atoms. Preferred aliphatic rings are cycloalkanes or cycloalkenes having 4 to 8 carbons. X may have an intramolecular cross-link. Examples of X with the intramolecular cross-link include adamantane, norbornene, and norbornane.

In more specific embodiments, preferred examples of the divalent groups X's are listed below. In this case, n in Formula (1) is 2.

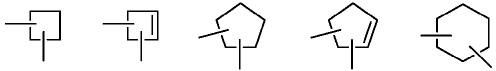

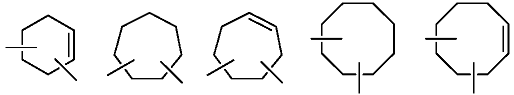

Among the divalent groups X's represented by the general formula particularly preferred is a 1,2-cyclohexylene group. In this case, positions 1 2 of cyclohexane are each substituted by a group represented by the bracketed portion of Formula (1).

Preferred examples of allyl monomers represented by Formula (1) include diallyl 1,2-cyclohexanedicarboxylate, diallyl 1,3-cyclohexane dicarboxylate, diallyl 1,4-cyclohexanedicarboxylate, diallyl 4-cyclohexene-1,2-dicarboxylate, and diallyl 2-cyclohexene-1,2-dicarboxylate. Among these more preferred are diallyl 1,2-cyclohexanedicarboxylate, diallyl 4-cyclohexene-1,2-dicarboxylate, and diallyl 1,4-cyclohexanedicarboxylate. Most preferred is diallyl 1,2-cyclohexanedicarboxylate.

The allyl monomers represented by Formula (1) are prepared by dehydration-condensation and esterification of cycloalkane or cycloalkene having 4 to 8 carbon atoms and 2 or 3 carboxyl groups with allyl alcohol having substituents R¹ and R². It has already been mentioned that both substituents R¹ and R² are preferably hydrogen atoms.

To polymerize the allyl monomer represented by Formula (1) into a polymer, the allyl monomer may be polymerized with a radical polymerization initiator. Examples of such radical polymerization initiators include azo initiators, such as azobisisobutyronitrile and dimethyl 2,2'-azobisisobutyrate; peroxide initiators, such as ketone peroxide, peroxyketal, hydroperoxide, dialkyl peroxide, diacyl peroxide, peroxydicarbonate, peroxyesters, and benzoyl peroxide; acetophenone initiators, such as 2-methyl-1-[4-(methylthio)phenyl]-2-morpholinopropan-1-one and 1-hydroxycyclohexyl phenyl ketone; benzoin initiators, such as benzoin and benzoin ethyl ether; benzophenone initiators, such as benzophenone; phosphorus-based initiators, such as acylphosphine oxide; sulfur-based initiators, such as thioxanthone; and benzyl-based initiators, such as benzyl and 9,10-phenanthrenequinone. These polymerization initiators can be used alone or in any combination.

The amount of polymerization initiator to be added is preferably 5 parts by mass or less, more preferably 3 parts by mass or less, most preferably 0.001 to 3 parts by mass for 100 parts by mass of allyl monomer represented by Formula (1). The reaction temperature during polymerization may be from 60 to 240°C. The reaction time may be from 0.1 to 100 hours.

In polymerization of the allyl monomer represented by Formula (1) into a polymer, a homopolymer may be prepared with a single allyl monomer or a copolymer may be prepared with two or more allyl monomers or other monomers in any combination. Most preferred is a homopolymer of diallyl 1,2-cyclohexanedicarboxylate, which is not restrictive.

The polymer has a weight average molecular weight of preferably 300000 or less, more preferably 200000 or less, even more preferably from 2000 to 150000, and most preferably from 5000 to 140000.

Such a polymer may be as synthesized as described above, or may be selected from a commercially available product. A typical example of such commercially available products includes those made by Osaka Soda Co.

The content of the polymer in the entire ink composition ranges from about 1 to 30% by mass, preferably 5 to 30% by mass, more preferably about 5 to 20% by mass, and most preferably 5 to 15% by mass.

### [Resin of modified rosin and resin containing terpene monomer backbone]

The ink composition of the present invention contains a (b) component that is a resin of modified rosin and/or a resin containing a terpene monomer skeleton. The ink composition of the present invention containing a combination of the above-mentioned polymer and such resins exhibits both adhesiveness and fluidity. In the specification, "adhesiveness" means the adhesiveness between the cured film of the ink composition and the substrate after print with the ink composition and then irradiation with active energy rays.

The resin of modified rosin is prepared by modification of rosin. Examples of the rosin include gum rosin, wood rosin, and tall oil rosin, which are mainly composed of resin acids, such as abietic acid, parastichic acid, neoabietic acid, pimaric acid, isopimaric acid, and dehydroabietic acid. Further examples include disproportionated rosins prepared by disproportionation of these rosins, polymerized rosins prepared by dimerization or polymerization of these rosins, hydrogenated rosins prepared by hydrogenation of these rosins, and denatured rosins modified by partial maleation and/or fumarization of these rosins. Maleic anhydride is used for maleation of rosin, and fumaric acid is used for fumarization of rosin. Addition reactions of maleic anhydride and/or fumaric acid to rosin can be performed by any known process. For example, the raw rosin is heated to be melted, and then maleic anhydride and/or fumaric acid is added. The reaction may be carried out under either pressurized or atmospheric pressure.

Any resin of modified rosin having a monomer structure based on the rosin is available. Examples of such resin include rosin-modified alkyd resin, rosin-modified maleic acid resin (maleic rosin polyester), rosin-modified fumaric acid resin (fumaric rosin polyester), rosin-modified phthalic acid resin (phthalic rosin polyesters), rosin-modified phenolic resins, and rosin-modified petroleum resins. All of the resins of modified rosins are commercially available and can be easily obtained. Examples of such commercially available products include Hartol R-WW, Haritac AQ-90A, and Harimac T-80 made by Harima Chemicals, China Rosin WW and Markeed 382 made by Arakawa Chemical Industry Co. Such commercially available resins of modified rosins may be used, or those synthesized by known means may be used.

The resin of modified rosin preferably has a weight average molecular weight of 1,000 or more and 100,000 or less. On the resin of modified rosin, a weight average molecular weight of 1,000 or more provides excellent pigment dispersion and good viscoelasticity to the ink composition, while a weight average molecular weight of 100,000 or less provides good solubility and excellent handling to the ink composition. A more preferred weight average molecular weight of resin of modified rosin is between 5,000 and 70,000.

Among rosin-modified alkyd resins, preferably used is a condensation polymer of an acid component containing a resin acid, a fatty acid, and a polybasic acid with a polyhydric alcohol. The acid number of the rosin-modified alkyd resin preferably ranges from 1 to 50 mgKOH/g. An acid number of 50 mg KOH or less can suppress the occurrence of troubles such as abnormal emulsification in the ink composition for offset printing containing this rosin modified alkyd resin. The acid number ranges more preferably from 1 to 25 mgKOH, most preferably from 1 to 10 mgKOH.

As described above, rosin-modified alkyd resin is preferably a condensation polymer of an acid component, containing resin acids, fatty acids, and polybasic acids with a polyhydric alcohol. These components will now be described.

Resin acids refer to abietic acid and its isomers contained in rosins, and their derivatives. Rosins are non-volatile components of pine resin, which is collected from pine plants and is mainly composed of abietic acid and its isomers. Abietic acid and its isomers contain abietic acid, neoabietic acid, parastichic acid, pimaric acid, isopimaric acid, and dehydroabietic acid, all of which have carboxy groups and can form esters with polyhydric alcohols as will be described below. The introduction of these resin acids into rosin-modified alkyd resins can improve the affinity for pigments and increase the proportion of biomass-derived components in the resulting rosin-modified alkyd resin.

Although abietic acid and its isomers contain only one carboxyl group, multiple carboxyl groups can be introduced by denaturation. For example, abietic acid, which is a trans-diene compound, can be isomerized by heat to a cis-diene compound. The Diels-Alder reaction of the resulting cis-diene compound with a dienophile compound having multiple carboxyl groups, such as maleic acid or 1,2-cyclohexenedicarboxylic acid can introduce multiple carboxyl groups into the abietic acid skeleton. In addition, polymerized rosin is synthesized by polymerizing multiple molecules of abietic acid or isomers thereof, and these compounds also have multiple carboxyl groups. The derivatives of abietic acid and its isomers refer to such compounds.

Since rosins are mainly composed of resin acids, rosin itself may be used in place of the above resin acids. Although several types of rosin are known due to differences in manufacturing process and subsequent chemical treatment, any of these rosins may be used. Examples of such rosins include gum rosin, wood rosin, tall rosin, disproportionated rosin, hydrogenated rosin, and polymerized rosin. The rosin may also be modified by the Diels-Alder reaction as described above. From the viewpoint of storage stability, it is preferable to use rosins that have no or few conjugated double bonds chemically. Disproportionated rosin and hydrogenated rosin can be cited as such rosins. Rosins with conjugated double bonds can also be used without problems, although the storage stability of the synthesized resin is somewhat inferior.

Fatty acids are prepared by hydrolysis of natural oils and fats, such as vegetable or animal oils, and have one carboxyl group, which allows them to form esters with polyhydric alcohols as described below. The introduction of such fatty acids into rosin modified alkyd resin can increase the proportion of biomass-derived components in the resulting rosin modified alkyd resin. From this perspective, it is preferable to use fatty acids in amounts such that the oil length, which is the proportion of the mass (mass %) of the fatty acid moiety to the mass of the total resin, is about 30 to 85, and it is more preferable to use fatty acids in amounts such that the oil length is about 50 to 85.

Examples of the fatty acids include caprylic acid, pelargonic acid, capric acid, lauric acid, myristic acid, pentadecyl acid, palmitic acid, margaric acid, stearic acid, oleic acid, linoleic acid, arachidic acid, and behenic acid. Fatty acids have carboxyl groups and are compounds with relatively high sp values. Among those fatty acids, as the number of carbon atoms decrease, the sp value tends to increase. From such a viewpoint, fatty acids with 8 to 16 carbon atoms can be preferably used in the present invention, and fatty acids with 8 to 14 carbon atoms can be used more preferably. Fatty acids may be either unsaturated or saturated. From the viewpoint of avoiding coloration caused by alteration, those with 1 unsaturated bond or less in the molecule are preferably used. Fatty acids with 2 or more unsaturated bonds, such as oleic acid, linoleic acid, and eleostearic acid are preferably subjected to oxidation treatment that involves epoxidation of the double bonds. Such modified fatty acids can also be used as fatty acids in the present invention. These fatty acids can be used alone or in any combination.

Polybasic acid is a compound having multiple carboxyl groups and is a component for polymerization with polyhydric alcohols into high molecular weight, as described below. Any polybasic acid having 2 or 3 carboxyl groups and anhydride of the acid used in the synthesis of alkyd resins can be used without restriction.

Examples of such compounds include phthalic anhydride, isophthalic acid, terephthalic acid, adipic acid, trimellitic acid, 1,2-cyclohexanedicarboxylic acid, 1,3-cyclohexenedicarboxylic acid, 1,4 cyclohexenedicarboxylic acid, hexahydro phthalic anhydride, 5-sodiosulfoisophthalic acid, fumaric acid, benzoic acid, tert-butylbenzoic acid, tetrahydro phthalic anhydride, maleic anhydride, succinic acid, succinic anhydride, fumaric acid, sebacic acid, azelaic acid, tetrabromo phthalic anhydride, methylheimic anhydride, tetrachlorophthalic anhydride, hexahydrophthalic anhydride, pyromellitic anhydride, trimellitic anhydride, and methylcyclohexene dicarboxylic anhydride. These compounds can be used alone or in any combination.

Polyhydric alcohols form esters with the previously described acid components, including resin acids, fatty acids, and polybasic acids, to increase the molecular weight of these components. Polyhydric alcohols, with 2 or 3 or more hydroxyl groups, used for the synthesis of alkyd resins may be used without limitation.

Examples of such compounds include ethylene glycol, 1,3-propanediol, 1,2-propanediol, 1,4-butanediol, diethylene glycol, triethylene glycol, polyethylene glycol, dipropylene glycol, 1,3-butanediol, neopentyl glycol, spiroglycol, dioxane glycol, adamantanediol, 3-methyl-1,5-pentanediol, methyloctanediol, 1,6-hexanediol, 1,4-cyclohexanedimethanol, 2-methylpropanediol-1,3, 3-methylpentanediol-1,5, hexamethylene glycol, octylene glycol, 9-nonanediol, 2,4-diethyl-1,5-pentanediol, ethylene oxide modified compounds of bifunctional phenols such as bisphenol A, propylene oxide modified compounds of bifunctional phenols such as bisphenol A, ethylene oxide and propylene oxide copolymerized modified compounds of bisphenol A, copolymerized polyether polyol of ethylene oxide and propylene oxide, polycarbonate diol, adamantane diol, polyether diol, polyester diol, and polycaprolactone diol. These compounds may be used alone or in any combination.

Monobasic acids other than fatty acids may be added as acid components to adjust the molecular weight of rosin modified alkyd resins. Examples of such monobasic acids include benzoic acid, acetic acid, propionic acid, and butyric acid.

The process of preparing rosin-modified alkyd resins using these components will now be described. Rosin modified alkyd resin is prepared by reaction of acid components including a resin acid, a fatty acid, and a polybasic acid with a polyhydric alcohol. The reaction procedure involves addition of a small amount of solvent such as xylene to a reaction vessel containing these raw materials and heating the materials with an inflow of inert gas such as nitrogen gas, and then condensation polymerization while removing water by azeotropic boiling with condensation water. The reaction may be carried out at a temperature of 170 to 250°C for 5 to 25 hours, which conditions may be modified. The end of the reaction can be determined by monitoring the acid value of the reaction mixture as the reaction time progresses. In other words, the reaction should be terminated when the acid number of the reaction mixture stops decreasing accompanied with condensation polymerization. The polymerization reaction can be performed in a shorter time by expelling the water generated by the polymerization from the system or by addition of a reaction catalyst. Examples of the reaction catalyst include tetrabutyl zirconate, monobutyl tin oxide, zirconium naphthate, and tetrabutyl titanate.

The resin containing terpene monomer skeletons will now be described. The resins containing terpene monomer backbone has a terpene-derived structure in its structure. Examples of the resin include terpene resins prepared by polymerization of terpene monomers only, and various resins polymerization of terpene monomers in combination with other monomer components.

Terpene monomers, also called terpene compounds, which have unsaturated bonds in their molecules, can polymerize by themselves or with other monomers to form polymers. Examples of such terpene monomers include α-pinene, β-pinene, calene, α-terpinene, v-terpinene, d-limonene, dipentene, terpinolene, α-phellandrene, β-phellandrene, paramentadienes, pyronene, camphene, allosimene, and myrcene. Preferred are d-limonene, dipentene, α-felandrene, β-felandrene, and α-terpinene. Terpene monomers may be used alone or in any combination.

Examples of other monomer components that can be used in any combination with terpene monomers include unsaturated dicarboxylic acids, unsaturated dicarboxylic anhydrides, and unsaturated dicarboxylic acid dialkyl esters, phenols, acrylates, styrene and other vinyl compounds. These monomer components are polymerized together with terpene monomers by cycloaddition reactions such as the Diels-Alder reaction, radical polymerization reactions, and cationic polymerization reactions. Examples of the unsaturated dicarboxylic acids include maleic acid and fumaric acid.

Examples of the resins containing terpene monomer skeletons include terpene resins, aromatic modified terpene resins, terpene phenolic resins, and hydrogenated terpene phenolic resins. Various types of such resins are commercially available, for example, from Yasuhara Chemical Corporation and Arakawa Chemical Industry Co.

The resin containing terpene monomer backbone preferably has a weight average molecular weight in the range of 1,000 to 100,000. On the resin containing terpene monomer backbone, a weight average molecular weight of 1,000 or more is preferable because it provides excellent pigment dispersion and satisfactory viscoelasticity to the ink composition, while a weight average molecular weight of 100,000 or less is preferred because it has satisfactory solubility and excellent handling properties. A more preferred weight average molecular weight of the resin containing terpene monomer backbone is in the range of 5,000 to 70,000.

The content of the resin of modified rosin and/or the resin containing terpene monomer backbone, i.e. the (B) component, in the ink composition, is preferably 1 to 30% by mass, more preferably 3 to 20% by mass, further preferably 3 to 15% by mass, particularly preferably 3 to 10% by mass, even more preferably 3 to 15% by mass, most preferably 3 to 10% by mass. A (B) component in a liquid form can be added to the ink composition as it is. A (B) component in a solid form can be dissolved in the afore-mentioned monomer component with ethylenically unsaturated bond and then added to the ink composition as appropriate.

The total content of the (A) and (B) components in the ink composition ranges, preferably from 5 to 40 mass percent, more preferably from 5 to 30 mass percent, even more preferably from 5 to 20 mass percent, most preferably from 8 to 15 mass percent.

The proportion of the (A) component and (B) component contained in the ink composition ranges preferably from 20:80 to 80:20, more preferably from 30:70 to 70:30, most preferably 40:60 to 60:40 in mass ratio (A) component:(B) component.

The sp value of the (B) component determined by the Fedors method is preferably in the range of 7.0 to 12.0 (cal/cm³).

### Photoinitiator

The photoinitiator generates radicals when irradiated with ultraviolet light, and the generated radicals polymerize the compound with ethylenically unsaturated bond to cure the ink composition. Any photoinitiator is available that generate radicals when irradiated with ultraviolet light. The photoinitiator is an essential component in the case that the active energy beams are light for curing the ink composition, but is not an essential component in the case that the active energy beams are electron beams.

Examples of the photoinitiator include benzophenone, diethylthioxanthone, 2-methyl-1-(4-methylthio)phenyl-2-morpholinopropan-1-one, 4-benzoyl-4'-methyldiphenylsulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propan-1-one, 2,2-dimethyl-2-hydroxyacetophenone, 2,2-dimethoxy-2-phenylacetophenone, 2,4,6-trimethylbenzyl-diphenylphosphine oxide, and 2 -benzyl-2-dimethylamino -1-morpholinophenyl-butan-1-one. Such photoinitiators are commercially available, for example, from IGM Resins B.V. under trade names, such as Omnirad 907, Omnirad 369, Omnirad 184, Omnirad 379, Omnirad 819, and Omnirad TPO, and from Lamberti under trade names, such as DETX. These photoinitiators may be used alone or in any combination.

The content of the photoinitiator in the ink composition ranges preferably from 1 to 20% by mass, more preferably 2 to 15% by mass, most preferably 2 to 13% by mass. A content of the photoinitiator in the ink composition within the above preferable range achieves sufficient curability, satisfactory internal curability, and practical cost of the ink composition at the same time. Since the ink compositions of the present invention have improved curability upon UV irradiation due to the inclusion of epoxidized fat described below, the amount of photoinitiator can be reduced compared to conventional products. Accordingly, it is preferable to reduce the amount of photoinitiator used as appropriate while taking actual printing conditions into consideration.

### Colorant

Colorants may be added to the ink compositions of the present invention as necessary. The colorants are components added to the ink composition to give it coloring ability and/or shielding ability, and include color pigments, white pigments, and metallic powders. Any colorants conventionally used in ink compositions may be used without restriction regardless of organic or inorganic pigments. In the case that the ink composition of the present invention does not contain colorants, they are preferably used in coating applications, for example.

Examples of the colorants include yellow pigments, such as Disazo Yellows (Pigment Yellow 12, Pigment Yellow 13, Pigment Yellow 14, Pigment Yellow 17, and Pigment Yellow 1) and Hansa yellow; magenta pigments, such as Brilliant Carmine 6B, raked red C, and watching red; cyan pigments, such as Phthalocyanine Blue, Phthalocyanine Green and Alkali Blue; black pigments, such as carbon black; white pigments, such as titanium dioxide; and metal pigments, such as aluminum paste and bronze powder.

Although a typical content of the colorant ranges from about 1 to 30% by mass of the total ink composition, the content can be modified as appropriate. On preparation of colored ink compositions, other colorants may be used together as complementary colors or ink compositions of other colors.

### Other Ingredients

The ink composition of the present invention may contain other ingredients as needed, besides the above-mentioned ingredients Examples of such ingredients include body pigments, polymerization inhibitors, dispersants, phosphates and other salts, waxes such as polyethylene waxes, olefin waxes, Fischer-Tropsch waxes, and alcohols.

Body pigments are components that impart properties such as moderate printability and viscoelasticity to ink compositions. Various types of pigments normally used in the preparation of ink compositions can be used. Examples of such body pigments include clay, kaolinite or kaolin, barium sulfate, magnesium sulfate, calcium carbonate, silicon oxide or silica, bentonite, talc, mica, and titanium dioxide. The typical amount of such body pigments added to the total ink composition ranges from 0 to 33% by mass, which is not restrictive.

Examples of preferable polymerization inhibitors include phenol compounds, such as butyl hydroxytoluene, tocopherol acetate, nitrosamines, benzotriazoles, and hindered amines. More preferred is butyl hydroxytoluene. The polymerization inhibitor added to the ink composition prevents the polymerization reaction from progressing during storage and causing the ink composition to thicken. The content of the polymerization inhibitor in the ink composition ranges, for example, from 0.01 to 1% by mass.

Dispersants are used to disperse colorants and body pigments contained in ink compositions in good condition. Various types of such dispersants are commercially available, such as the DISPERBYK (trade name) series manufactured by Bic Chemie Japan Co.

The ink composition of the present invention may be produced with the above-mentioned components by conventionally known processes. For example, after mixing necessary components, pigments (i.e., colorants and body pigments) are dispersed by kneading with a bead mill or three-roll mill, for example, additives (for example, polymerization inhibitors, alcohols, and waxes) are added as necessary, and the viscosity is further adjusted by addition of monomer components and oil components. The viscosity in the ink composition is, for example, 10 to 70 Pa-s at 25°C determined with a Raleigh viscometer in offset printing. Viscosity may be modified according to the application.

### Examples

The invention will now be described in more detail by way of examples, which are not construed limiting the invention in any way.

### Preparation of Rosin-Modified Alkyd Resin A

Into a reaction vessel equipped with a stirrer, a reflux cooler, and a thermometer was placed 125 mass parts of epoxidized soybean oil, 375 mass parts of disproportionated rosin, (product name "dehydroabietic acid" manufactured by FUJIFILM Wako Pure Chemicals Corporation, acid number: 136 mg KOH/g), 1.5 mass parts of triphenylphosphine, 25 mass parts of 1,2 cyclohexenedicarboxylic acid, and 25 parts by mass of glycerol, and reacted at 200°C for 5 hours under a nitrogen atmosphere to prepare rosin modified alkyd resin A. The resulting rosin modified alkyd resin A had a weight average molecular weight of 35,000 and an acid value of 3.5 mg KOH/g.

### Preparation of Rosin-Modified Alkyd Resin B

Into a reaction vessel equipped with a stirrer, a reflux cooler, and a thermometer was placed 125 parts by mass of coconut fatty acid, 375 parts by mass of disproportionated rosin (product name "dehydroabietic acid" manufactured by FUJIFILM Wako Pure Chemicals Corporation, acid number: 136 mg KOH/g), 1.5 parts by mass of triphenylphosphine, 25 parts by mass of 1,2 cyclohexenedicarboxylic acid, and 25 parts by mass of glycerol, and reacted at 200°C for 5 hours under a nitrogen atmosphere to prepare rosin modified alkyd resin B. The resulting rosin modified alkyd resin B had a weight average molecular weight of 25,000 and an acid value of 3.0 mg KOH/g.

### Preparation of Varnish 1

Into a four-neck flask equipped with a cooling tube, a thermometer, and a stirrer was placed 30 parts by mass of a polymer of diallyl 1,2-cyclohexanedicarboxylate (product name RADPAR-AD032, manufactured by Osaka Soda Co.), 69.4 parts by mass of trimethylolpropane triacrylate (TMPTA), and 0.2 parts by mass of dibutylhydroxytoluene (BHT). The contents were then heated to 140°C and maintained at that temperature for 50 minutes to dissolve the resin. Into the reaction vessel was then placed 0.4 mass parts of aluminium ethylacetoacetate diisopropylate (ALCH, Kawaken Fine Chemical Co., Ltd.), and the contents were heated to 170°C and maintained at that temperature for 60 minutes to gelatinize the resin to prepare Varnish 1. Varnish 1 contains a polymer of allyl monomer represented by Formula (1).

### Preparation of Varnish 2

Varnish 2 was prepared in the same manner as Varnish 1, except that a polymer of diaryl isophthalate (product name Daiso Isodup, manufactured by Osaka Soda Co., Ltd.) was used instead of the polymer of diallyl 1,2-cyclohexanedicarboxylate. Varnish 2 contains diallyl phthalate resin.

### Preparation of Varnish 3

Varnish 3 was prepared in the same manner as Varnish 1, except that a polymer of diallyl phthalate (product name Daisodup A, made by Osaka Soda Co., Ltd.) was used instead of the polymer of diallyl 1,2-cyclohexanedicarboxylate. Varnish 3 contains diallyl phthalate resin.

### Preparation of Varnish A

Varnish A was prepared in the same manner as Varnish 1, except that rosin-modified alkyd resin A was used instead of the polymer of diallyl 1,2-cyclohexanedicarboxylate. Varnish A contains resin of modified rosin.

### Preparation of Varnish B

Varnish B was prepared in the same manner as Varnish 1, except that rosin-modified alkyd resin B was used instead of the polymer of diallyl 1,2-cyclohexanedicarboxylate. Varnish B contains resin of modified rosin.

### Preparation of Varnish C

Varnish C was prepared in the same manner as Varnish 1, except that terpene resin (product name YS Resin PX1000, manufactured by Yasuhara Chemical Corporation) was used instead of the polymer of diallyl 1,2-cyclohexanedicarboxylate. Varnish C contains resin with a terpene monomer skeleton.

Each component was mixed in the formulations listed in Tables 1 and 2, the mixture was kneaded with a triple roll mill at a roll temperature of 40°C until the particle size reached 5.0 pm or less, and 5 parts by mass of trimethylolpropane triacrylate (TMPTA) were added, if necessary, to adjust the viscosity to be around 40 Pa ·s. Compositions of Examples 1 through 16 and Comparative Examples 1 through 5 were thereby prepared. The amounts of the components in Tables 1 and 2 are in parts by mass.

The specification of each material listed in Tables 1 and 2 is as follows where TPO and EAB belong to photoinitiators:
Black pigment: carbon black (product name MA-70, manufactured by Mitsubishi Chemical Corporation)
Yellow pigment: Pigment Yellow 13 (Clariant Chemicals Co., Ltd., product name BHS)
Red pigment: Pigment Red 57:1 (Clariant Chemicals Co., Ltd., product name L5B)
Indigo pigment: Copper Phthalocyanine pigment (product name FASTOGEN Blue FDB13, manufactured by DIC Corporation)
TMPTA: trimethylolpropane triacrylate
Di-TMPTA: ditrimethylolpropane tetraacrylate
Wax: Polyethylene wax (product name NJ-100, manufactured by Morimura Chemical Co.)
TPO: 2,4,6-trimethylbenzoyl diphenylphosphine oxide
EAB: 4,4'-bis(diethylamino)benzophenone

### Evaluation of fluidity

Flow values were measured with a spread meter for f the ink compositions of examples, comparative examples, and reference examples to determine the fluidity from a flow slope value, which is the numerical value determined by subtracting the spread diameter in mm observed after 10 seconds from the spread diameter in mm observed after 100 seconds. A larger flow slope value indicates better fluidity. The results are shown in the "fluidity" column of Tables 1 and 2 where the evaluation criteria are as follows:
A: Flow slope value is greater than 4.0
B: Flow slope value is between 2.0 and 4.0
C: Flow slope value is less than 2.0

### Evaluation of adhesiveness

Adhesiveness of the ink compositions in Examples, Comparative Examples, and Reference Examples was evaluated after curing to the resin film. A 0.1 cc sample of the ink composition was spread on (polypropylene (PP) film (product name: Polychem PC-8162, manufactured by Sekisui Molding Industry Co, and immediately irradiated with UV rays (metal halide lamp, irradiation dose: 36 mJ/cm²) to cure the ink composition. After the cured film was left at room temperature for 1 minute, a cellophane tape (product name: Cellotape (registered trademark) manufactured by Nichiban Corporation) was applied to the surface of the cured film and peeled off at once. The approximate remaining area rate (%) of the cured film of the ink composition on the surface of the resin film was then determined and evaluated in five levels in accordance with the following criteria. The results are shown in the "Adhesiveness" column of Tables 1 and 2. A larger remaining area rate indicates better the adhesiveness between the cured film and the resin film.
5: Remaining area rate was more than 90%.
4: The remaining area rate was between 70% and 90%.
3: The remaining area rate was between 50% and 70%.
2: The remaining area rate was between 30% and 50%.
1: The remaining area rate was less than 30%.

**Table 1**

| | Examples | | | | | | | | | |
|---|---|---|---|---|---|---|---|---|---|---|
| | 1 | 2 | 3 | 4 | 5 | 6 | 7 | 8 | 9 | 10 |
| Varnish 1 | 20 | 20 | 20 | 20 | 20 | 20 | 20 | 20 | 20 | 20 |
| Varnish A | 20 | 20 | 20 | 20 | | | | | | |
| Varnish B | | | | | 20 | 20 | 20 | 20 | | |
| Varnish C | | | | | | | | | 20 | 20 |
| Black pigment | 22 | | | | 22 | | | | 22 | |
| Yellow pigment | | 12 | | | | 12 | | | | 12 |
| Red pigment | | | 20 | | | | 20 | | | |
| Indigo pigment | | | | 20 | | | | 20 | | |
| TMPTA | 15 | 25 | 17 | 17 | 15 | 25 | 17 | 17 | 15 | 25 |
| Di-TMPTA | 10 | 10 | 10 | 10 | 10 | 10 | 10 | 10 | 10 | 10 |
| Wax | 3 | 3 | 3 | 3 | 3 | 3 | 3 | 3 | 3 | 3 |
| TPO | 7 | 7 | 7 | 7 | 7 | 7 | 7 | 7 | 7 | 7 |
| EAB | 3 | 3 | 3 | 3 | 3 | 3 | 3 | 3 | 3 | 3 |
| Total | 100 | 100 | 100 | 100 | 100 | 100 | 100 | 100 | 100 | 100 |
| Fluidity | A | A | A | A | A | A | A | A | A | A |
| Adhesiveness | 5 | 5 | 5 | 5 | 5 | 5 | 5 | 5 | 5 | 5 |

**Table 2**

| | Examples | | | | | | Comparative Examples | | | | |
|---|---|---|---|---|---|---|---|---|---|---|---|
| | 11 | 12 | 13 | 14 | 15 | 16 | 1 | 2 | 3 | 4 | 5 |
| Varnish 1 | 20 | 20 | 20 | 20 | 20 | 10 | 40 | | | 20 | |
| Varnish 2 | | | | | | | | 20 | | 20 | 20 |
| Varnish 3 | | | | | | | | | 20 | | 20 |
| Varnish A | | | 10 | 10 | | 20 | | 20 | 20 | | |
| Varnish B | | | 10 | | 10 | | | | | | |
| Varnish C | 20 | 20 | | 10 | 10 | | | | | | |
| Black pigment | | | 22 | 22 | 22 | 22 | 22 | 22 | 22 | 22 | 22 |
| Yellow pigment | | | | | | | | | | | |
| Red pigment | 20 | | | | | | | | | | |
| Indigo pigment | | 20 | | | | | | | | | |
| TMPTA | 17 | 17 | 15 | 15 | 15 | 25 | 15 | 15 | 15 | 15 | 15 |
| Di-TMPTA | 10 | 10 | 10 | 10 | 10 | 10 | 10 | 10 | 10 | 10 | 10 |
| Wax | 3 | 3 | 3 | 3 | 3 | 3 | 3 | 3 | 3 | 3 | 3 |
| TPO | 7 | 7 | 7 | 7 | 7 | 7 | 7 | 7 | 7 | 7 | 7 |
| EAB | 3 | 3 | 3 | 3 | 3 | 3 | 3 | 3 | 3 | 3 | 3 |
| Total | 100 | 100 | 100 | 100 | 100 | 100 | 100 | 100 | 100 | 100 | 100 |
| Fluidity | A | A | A | A | A | A | C | A | C | B | B |
| Adhesiveness | 5 | 5 | 5 | 5 | 5 | 5 | 1 | 1 | 1 | 1 | 1 |

Examples in Tables 1 and 2 all exhibit satisfactory fluidity and adhesiveness. The comparison of Examples with Comparative Examples in Tables 1 and 2 demonstrates that the combination of the polymer of allyl monomer and resin of modified rosin or resin containing terpene monomer backbone is effective in achieving satisfactory fluidity and adhesiveness.

## Claims

1. An active energy ray curable ink composition comprising a compound having an ethylenically unsaturated bond, an (A) component being a polymer of an allyl monomer represented by Formula (1), and a (B) component being a resin of modified rosin and/or a resin containing a terpene monomer backbone: 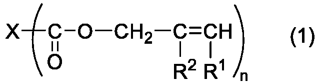 where R¹ and R² are each independently a hydrogen atom or an alkyl group of 1 to 5 carbon atoms, X is an n-valent group comprising a 4 to 8 membered fatty ring skeleton, and n is 2 or 3.

2. The active energy ray curable ink composition of claim 1, wherein X in Formula (1) is a divalent group represented by any one of the following formulae:

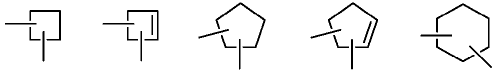

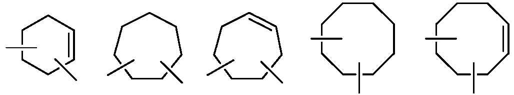

3. The active energy ray curable ink composition according to claim 1 or 2, wherein the (B) component has a weight average molecular weight in the range of 1000 to 100,000.

4. The active energy ray curable ink composition according to any one of claims 1 to 3, wherein the content of the (A) component in the entire composition is 1 to 30% by mass.

5. The active energy ray curable ink composition according to any one of claims 1 to 4, wherein the content of the above (B) component in the entire composition is 1 to 30% by mass.

6. The active energy ray curable ink composition according to any one of claims 1 to 5, wherein the total content of said (A) component and said (B) component in the total composition is 5 to 40 % by mass.

7. The active energy ray curable ink composition according to any one of claims 1 to 6, wherein the mass ratio of the component (A) to the component (B) is 20:80 to 80:20.

8. The active energy ray curable ink composition of any one of claims 1 to 7, wherein the resin of modified rosin is an alkyd resin of modified rosin.

9. The active energy ray curable ink composition of any one of claims 1 to 8, wherein X in Formula (1) is a 1,2-cyclohexylene group.
